# NEW EUROPEAN PATENT SPECIFICATION

(11) **EP 1 706 646 B2**
(45) Date of publication and mention of the opposition decision: **10.02.2016**
(45) Mention of the grant of the patent: 26.05.2010
(21) Application number: 05700890.6
(22) Date of filing: 13.01.2005
(51) Int. Cl.: F04D 29/58, B63J 99/00

(54) **COMPRESSOR**
VERDICHTER
COMPRESSEUR

(30) Priority: 16.01.2004 GB 0400986
(43) Date of publication of application: 04.10.2006
(73) Proprietor: Cryostar SAS, 68220 Hesingue (FR)
(72) Inventor: POZIVIL, Josef c/o Cryostar France S.A., F-68220 Hesingue (FR); GERSTENDOERFER, Helmut, CH-5016 Ober-Erlinsbach (CH)
(74) Representative: m patent group
(86) International application number: PCT/EP2005/000279
(87) International publication number: WO 2005/068847

(56) References cited:
- EP-A- 0 069 717
- EP-A- 0 293 832
- EP-A- 0 580 910
- EP-A- 1 643 181
- US-A- 4 015 436
- US-A- 4 187 899
- US-A- 5 137 558
- US-A- 5 520 000

## Description

This invention relates to a rotary liquefied natural gas boil-off compressor.

Liquefied natural gas is required to be stored in thermally-insulated tanks. Notwithstanding the thermal insulation, there is always a discernible inflow of heat from the surroundings which causes the liquefied natural gas to boil at a modest rate. The resulting boiled-off liquefied natural gas may be compressed and reliquefied or may be used as a fuel. Use of the boiled-off natural gas as a fuel usually requires its compression. For example, it has been proposed to use the boil-off gas from a shipboard liquefied natural gas storage tank to fuel a gas turbine forming part of the ship's propulsion system. Such a gas turbine, typically requires the boiled-off natural gas to be compressed to a pressure in the order of 20 to 40 bar. In another example, the natural gas is employed together with diesel fuel in an engine employing both fuels. In this example, the natural gas may be compressed to a pressure in the range of 5 to 7 bar.

Conventional boil-off compressors employ six compression stages in series if a pressure as high as 40 bar needs to be achieved. The compression of the gas in each stage generates heat. Accordingly the natural gas is cooled between each pair of successive stages by indirect heat exchange with water. Such machines typically require quite large motors and have a substantial power consumption. Document EP 0 293 832 discloses such a compressor wherein intercooling is realised by injection of LNG.

It is an aim of the present invention to provide a liquefied natural gas boil- off compressor which has a reduced size and power consumption.

According to the present invention there is provided a liquefied natural gas boil-off compressor according to claim 1.

A method of operating a rotary liquefied natural gas boil-off compressor having at least two compression stages in series and a gas passage passing through the series of compression stages, comprises cooling the compressed boiled-off natural gas by means of a cryogenic coolant downstream of one of the compression stages and upstream of another, monitoring the inlet temperature of the compressed natural gas at the inlet to the other compression stage, and adjusting the flow rate of cryogenic coolant so as to maintain said inlet temperature at a chosen sub-ambient temperature or between chosen subambient temperature limits.

By use of a cryogenic coolant in accordance with the invention, particularly between each pair of successive compression stages, it is possible to increase the ratio of the outlet pressure to the inlet pressure of each such stage, and thereby typically reduce the number of compression stages required to achieve a particular pressure. For example, it is possible by means of the compressor according to the invention to raise the pressure of boiled-off liquid natural gas from 1 bar to approximately 40 bar using only four stages of compression, whereas a comparable conventional compressor employing non-cryogenic cooling, typically water cooling, requires six stages to reach such a high pressure. As a result, the invention makes it possible in these circumstances to achieve the same increase of pressure with a smaller machine using fewer compression stages and a lower power consumption.

It is envisaged to have a cryogenic cooling means intermediate each pair of compression stages. If there are three or more compression stages it is preferred that at least one of the cryogenic cooling means is an indirect cryogenic cooling means and at least one other is a direct cooling means. In one preferred arrangement a cryogenic liquid is only partially vaporised in an indirect cryogenic cooling means and there is a passage placing the inlet of a direct cryogenic cooling means in communication with the outlet of the indirect cryogenic cooling means.

There may also be a direct or indirect cryogenic cooling means downstream of the final compression stage. If indirect, the cryogenic cooling means may have an outlet communicating with an inlet to a direct cryogenic cooling means upstream thereof.

The source of the cryogenic coolant is preferably the same liquefied natural gas storage tank or array of storage tanks from which the boil-off gas is evolved. Such tanks are conventionally equipped with so-called stripping pumps which may be employed to supply the cryogenic liquid to the cryogenic coolant means. Alternatively, a dedicated cryogenic coolant supply pump may be used.

There may be a cryogenic cooling means upstream of the first compression stage. Such a cryogenic cooling means will not normally be operated as the boiled-off natural gas is usually at a cryogenic temperature, but may be required when the liquefied natural gas storage tank is nearly empty, and the boil-off gas is therefore typically received at an undesirably high temperature, a condition that typically occurs after an ocean going LNG tanker has discharged its load of LNG to a shorebased terminal. The upstream cooling means may also be employed at start up when the piping is warm.

In order to supplement the rate at which natural gas is compressed, the compressor according to the invention has an intermediate inlet communicating with a forcing liquefied natural gas vaporiser.

The forcing vaporiser and the cryogenic cooling means may if desired share a common pump for the supply of the cryogenic liquid.

The inlet temperature of each stage of the compressor is preferably maintained at a temperature in the range of minus 50 to minus 140 °C. By this means, it is possible to achieve a pressure ratio across each stage in the range of 2.15 : 1 to 3 : 1, and typically in the range 2.5 : 1 to 3 : 1. It is particularly desirable to avoid the presence of any droplets of liquid in the natural gas entering any stage of the compressor. Accordingly, if any direct cryogenic cooling means is employed, the resulting cooled gas may be passed through an apparatus for disengaging particles of liquid therefrom.

Compressors will now be described by way of example with reference to the accompanying drawings, in which:
Figures 1 to 5 of the accompanying drawings are all schematic flow diagrams, whereby Figures 3 and 4 show embodiments of the invention and
Figure 6 shows a modification to any of the direct cooling stages of the compressors shown in Figures 2, 4 and 5.

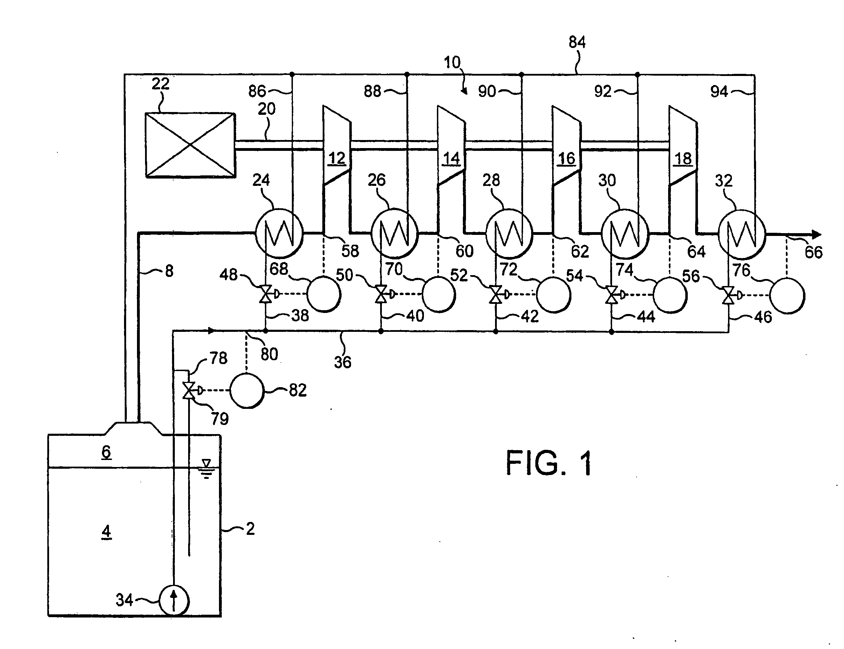

Referring to Figure 1 of the drawings, there is shown an LNG storage tank 2. For the purposes of ease of illustration, various pipes and valves associated with the tank 2, for example, its fill pipe and its LNG discharge pipe, are not shown in Figure 1 and the other drawings. The configuration and operation of such LNG tanks is however well known in the art. The tank 2 is typically located on board an ocean-going tanker (not shown). The tank 2 is shown containing a volume 4 of LNG. There is an ullage space 6 above the surface of the volume 4 of LNG in the tank 2. The tank 2 is vacuum-insulated or has another form of thermal insulation associated therewith so as to keep down the rate of flow of heat from the ambient environment into the liquid 4. Since LNG boils at a cryogenic temperature, notwithstanding the thermal insulation of the tank 2, there is continuous adsorption of heat by the LNG from its surroundings and hence continuous evaporation of the LNG into the ullage space 6. As a result there is a continuous flow of vaporised gas out of the tank 2 into a passage 8. The passage 8 provides a flow of gas to a plural stage, centrifugal, natural gas compressor 10. Apart from the arrangements for cooling the gas downstream of each stage of the compressor 10, and an optional arrangement for cooling the gas upstream of the first stage thereof, it is essentially conventional but is made of materials suitable for use at cryogenic temperatures. Unlike, say, a nitrogen compressor, the natural gas compressor 10 is built to be explosionproof. Because many features of the natural gas compressor 10 are conventional they are not illustrated in Figure 1 of the drawings. Thus, for example, the rotary devices within the individual compression stages are not shown.

The centrifugal compressor 10 has, as shown, four compression stages 12, 14, 16 and 18 in series. The rotary member (not shown) of each of the compression stages 12, 14, 16 and 18 may be mounted on the same drive shaft 20 and driven by an electric motor 22. It is not, however, necessary for all the compression stages to be mounted on the same shaft. If desired, some of the stages may be mounted on a first shaft and others on a second shaft with drive from one shaft to another being transmitted through a gear box. Similarly, it is not necessary for an electric motor 22 to be used to drive the shaft 20. Other kinds of motor may be used instead, or other forms of drive such as a steam turbine may be used instead. If an electric motor 22 is employed, however, it is preferably of a kind that has a single speed or it employs a frequency converter to enable the speed of rotation to be varied and thus the performance of the compressor to be optimised.

Compression of the natural gas in each of the stages 12, 14, 16 and 18 causes its temperature to rise. In general, the greater the temperature rise the less thermodynamically efficient the compression. The greater the inlet temperature at each compression stage, the more power that is consumed in compressing the gas. Further, as the temperature of the gas rises so its density falls. The more dense the gas, the smaller the compression stage needed to achieve a given increase in pressure. This corresponds to the enthalpy change at lower or higher temperature.

In accordance with the invention, a first cryogenic interstage heat exchanger 26 is located intermediate the first compression stage 12 and the second compression stage 14; a second cryogenic interstage heat exchanger 28 is located intermediate the second compression stage 14 and the third compression stage 16, and a third cryogenic interstage heat exchanger 30 is located intermediate the third compression stage 16 and the final compression stage 18. The heat exchangers 26, 28 and 30 are employed to effect cryogenic interstage cooling of the natural gas as it flows through the series of compression stages 12, 14, 16 and 18 in sequence. A further cryogenic heat exchanger 32 is located downstream of the final compression stage 18 and a yet further cryogenic heat exchanger 24 is located upstream of the first compression stage 12 in the sequence. Accordingly, the passage 8 extends in sequence through the upstream cryogenic heat exchanger 24, the first compression stage 12, the first cryogenic interstage heat exchanger 26, the second compression stage 14, the second cryogenic interstage heat exchanger 28, the third compression stage 16, the third cryogenic interstage heat exchanger 30, the final compression stage 18 and the downstream cryogenic heat exchanger 32.

Cooling of the boiled-off natural gas evolved from the volume of liquid 4 in the tank 2 is effected in each of the interstage heat exchangers 26, 28 and 30. The cooling is cryogenic so as to reduce the temperature of the gas entering the next compression stage in the sequence to a temperature in the range minus 50 to minus 140°C. The upstream heat exchanger 24 may also be used to cool the gas to a similar temperature upstream of the first compression stage 12, although, typically, the gas is already at this temperature so the heat exchanger 24 will during normal operation be bypassed or not operated. However, normal practice when discharging LNG from the tank 2 is to leave a small proportion of the liquid therein so as to maintain the tank 2 on the return journey. In consequence, during the return journey, the temperature of the boil-off gas tends to be much higher than when the tank 2 is full and it is then desirable to operate the upstream heat exchanger 24. Similarly, the downstream heat exchanger may be operated to cool the gas leaving the final stage 18 of the compressor 10 to a temperature in the range minus 50 to minus 140°C if the gas is required at such a cryogenic temperature. If it is required at ambient temperature, however, the cryogenic heat exchanger 32 may be omitted.

As shown in Figure 1, all the cryogenic heat exchangers 24, 26, 28, 30 and 32 are indirect heat exchangers. As will be discussed below, some or all may alternatively be direct heat exchangers, that is to say heat exchangers in which the coolant fluid is mixed with the fluid to be cooled. It should also be noted that it is possible in accordance with the invention to operate only one of the interstage heat exchangers 26, 28 and 30 cryogenically, but such a mode of operation is not preferred. It is also possible in accordance with the invention to provide a single indirect heat exchanger unit that provides cryogenic cooling of the boiled off natural gas intermediate two or more pairs of compression stages. For example, the heat exchangers 26, 28 and 30 may be combined in a single unit. Further, if desired, the heat exchangers 24 and 32 may be included in that unit.

The source of the cryogenic fluid for cooling the heat exchangers 24, 26, 28, 30 and 32 is the storage tank 2 itself. A submerged pump 34 within the tank 2 pumps liquefied natural gas (LNG) to a main pipeline 36. The main pipeline 36 communicates with cooling passages in the heat exchangers 24, 26, 28, 30 and 32 by distributor pipes 38, 40, 42, 44 and 46, respectively. Cooling is effected in each of these heat exchangers by partial or total vaporisation of the LNG in indirect heat exchange with the boil-off gas being compressed. Flow of the LNG into each of the interstage heat exchangers 26, 28 and 30 is controlled so as to maintain the temperature of the boil-off gas at the inlet to the next compression stage in the sequence at a chosen value or between chosen bounds. The first interstage heat exchanger 26 has in the distribution pipe 40 associated therewith a flow control valve 50 operatively associated through a valve controller 70 with a temperature sensor 60 positioned in the passage 8 at a region intermediate the exit for compressed boil-off gas from the heat exchanger 26 and the inlet to the second compression stage 14. It can be readily appreciated by those well versed in the art of flow control valves that the valve 50 may be so arranged as to maintain the temperature sensed by the sensor 60 at a chosen value, say minus 130°C, or between chosen limits, say, minus 125°C and minus 135°C. Essentially identical flow control equipment is provided for the two other interstage heat exchangers 28 and 30 and for the upstream heat exchanger 24 and the downstream heat exchanger 32. Control of the LNG flow to the heat exchanger 28 is provided by a flow control valve 52 in the distribution pipe 42. A temperature sensor 62 is positioned in the passage 8 intermediate the outlet of the heat exchanger 28 and the inlet to the next compression stage 16. A valve controller 72 is adapted to adjust the valve 52 so as to hold the sensed temperature at a chosen value or between chosen temperatures; an essentially identical arrangement of flow control valve 54, temperature sensor 64 and valve controller 74 is provided for the third interstage heat exchanger 30; an essentially identical arrangement of flow control valve 56, temperature sensor 66 and valve controller 76 for the downstream heat exchanger 32, and an essentially identical arrangement of flow control valve 48, temperature sensor 58 and flow controller 68 for the upstream heat exchanger 24.

Should the demand for LNG fluctuate, excess LNG may be returned to the tank via a return pipeline 78 which branches off from the main pipeline 36. Preferably, there is a flow control valve 79 in the pipeline 78 which is operatively associated via a valve controller 82 with a pressure sensor 80 in the main pipeline 36 at a region of it upstream of all the distributor pipes 38, 40, 42, 44 and 46 so as to maintain the LNG supply at constant pressure. If desired, the rate of pumping LNG from the tank 2 to the pipeline 36 may always be in excess of that required for the purposes of the heat exchangers 24, 26, 28, 30 and 32 so that there is always LNG returned to the tank 2 via the pipeline 78. Such return can be arranged to ameliorate or control the effects of stratification of the LNG in the tank 2.

In operation of the apparatus shown in Figure 1, LNG coolant passing through the heat exchangers 24, 26, 28, 30 and 32 flows in totally or partially vaporised form to a main return pipeline 84 via pipes 86, 88, 90, 92 and 94 associated with the heat exchangers 24, 26, 28, 30 and 32 respectively. The pipeline 84 as shown returns the cold natural gas from these heat exchangers to the ullage space of the tank 6. Alternatively, the pipeline 84 may terminate in a region of the passage 8 upstream of the heat exchanger 24 or even downstream of the heat exchanger 32 if the pressure of the LNG supply is high enough.

The compressed boiled-off natural gas can, as stated above, be arranged to leave the heat exchanger 32 at a temperature in the range of minus 60 to minus 140°C. If the gas is to be reliquefied, then a lower temperature is favoured. If the gas is, however, to be used as fuel for running an engine that provides propulsion for the ocean-going vessel, then a higher temperature is acceptable and indeed, if desired, the final heat exchanger 32 may be omitted or have a conventional water-cooled heat exchanger substituted for it.

The pressure ratio across each of the compression stages 12, 14, 16 and 18 may be selected according to the required final outlet pressure. For a gas turbine requiring a natural gas feed of 40 bar and a feed boil-off gas stream at a pressure of 1 bar, each compression stage may have a pressure ratio of 2.6 : 1. If, however, the gas turbine requires natural gas at a pressure of only 20 bar, the pressure ratio across each compression stage may be 2.1 : One particular advantage of the invention is that it is difficult to achieve pressure ratios as high as 2.6 : 1 with natural gas when conventional cooling is used. If desired, the pressure ratio across each compression stage may be tailored by appropriately setting the inlet temperature to that stage.

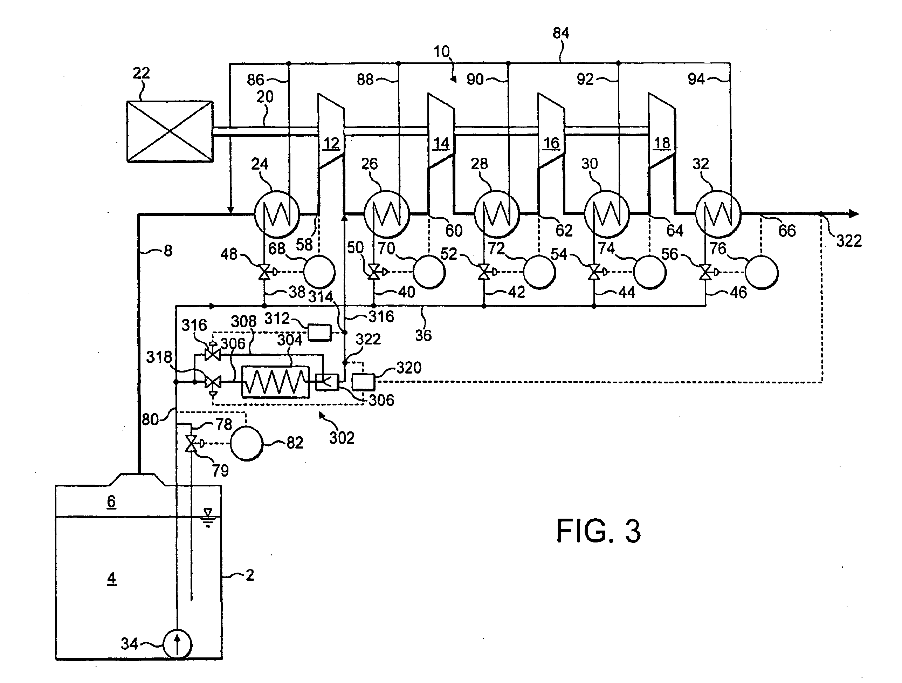

Some of the possible alternative embodiments of the compressor according to the invention are shown in Figures 3 to 4 of the accompanying drawings. Like parts shown in Figures 1 to 5 of the drawings are indicated by the same reference numerals.

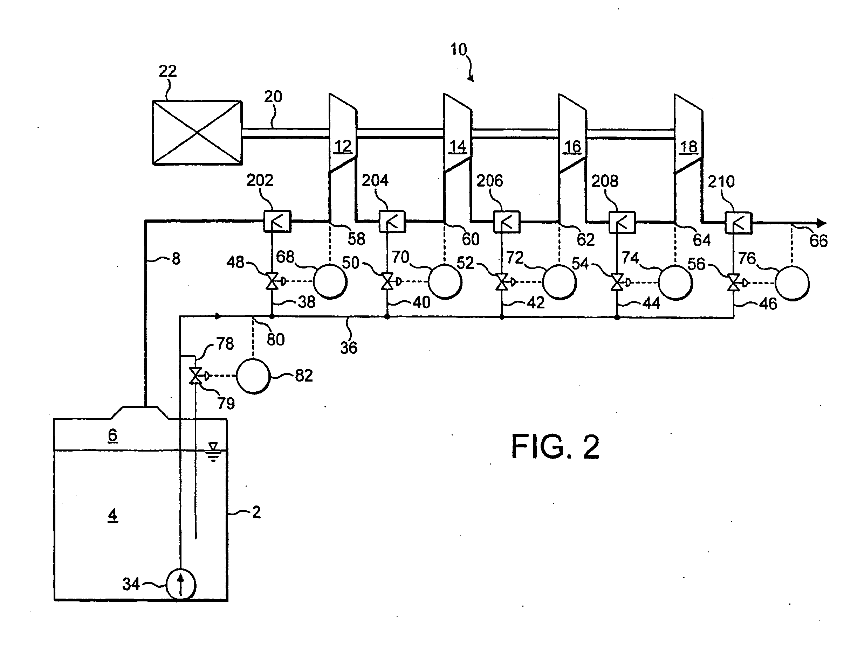

Referring first to Figure 2, the compressor and associated equipment shown therein, and their operation, are essentially the same as for the corresponding compressor and equipment shown in Figure 1 with the exception that the indirect heat exchangers 24, 26, 28, 30 and 32 of Figure 1 are replaced by direct heat exchangers 202, 204, 206, 208 and 210 respectively. In each of the direct heat exchangers 202, 204, 206, 208 and 210 the LNG is sprayed directly into the stream of boil-off gas from the storage tank 2 and therefore augments that stream. As a result, there is no vaporised natural gas to recirculate to the storage tank 2. Accordingly, the pipes 86, 88, 90, 92 and 94 and the return pipeline 84 are omitted from the equipment shown in Figure 2.

In a typical example of the operation of the apparatus shown in Figure 2, the outlet pressures of the compression stages 12, 14, 16 and 18 are 2.6, 6.3, 15.4 and 40 bar, respectively.

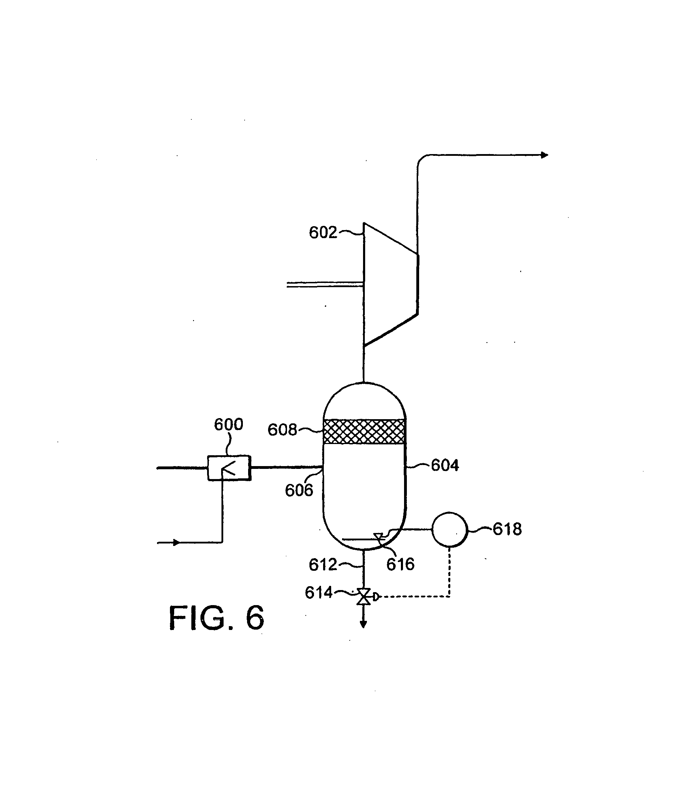

Whereas the boiled-off natural gas entering the pipeline 8 is depleted of heavier hydrocarbon impurities such as ethane, propane and butane, the LNG supplied by the pump 34 will normally contain these impurities. As a result, mixing of the boiled off natural gas with the LNG in the direct heat exchangers 202, 204, 206, 208 and 210 will tend to raise the dewpoint of the boiled-off natural gas. It is thus desirable to ensure that the temperature control is exerted so as to prevent particles of liquid being carried from a mixing chamber into a compression stage. If desired, the compressor shown in Figure 2 can be provided with a device for disengaging liquid particles from the boiled off natural gas intermediate any chosen direct heat exchanger and the compression stage immediately downstream thereof. For example, referring now to Figure 6 of the drawings there is included between a mixing chamber 600 and the compression stage 602 associated therewith a phase separation vessel 604 having a demister pad 608 or the like inserted therein above an inlet 606. The natural gas passes through the pad 608 and has any particles of liquid disengaged therefrom. The phase separation vessel 604 has an outlet 612 at its bottom for disengaged liquid. A flow control valve 614 is located in the outlet 612 and may be arranged to open whenever the level of the liquid in the vessel 604 reaches that of a level sensor 616. A valve controller 618 may be programmed so as to transmit the necessary signals to the valve 614. The LNG may be returned to the storage tank 2.

An arrangement such as that described above with reference to Figure 6 may be employed upstream of one or more of the compression stages shown in Figure 2 of the drawings.

Another alternative to the equipment shown in Figure 1 is illustrated in Figure 3. The equipment shown in Figure 3 is for use when the normal boil-off rate from the LNG stored in the tank 2 is too small to create enough energy for the ship's propulsion. For example, the boiloff may be burnt in a gas turbine or injected into a dual fuel diesel engine. Typically, approximately 50% to 60% of the propulsion power can be covered by the natural boil-off gas. The rest of the propulsion power is raised by oil or diesel fuel. The equipment shown in Figure 3 can be used when a greater proportion or all of the energy for propulsion of the ship is to be generated by combustion of the gas. The equipment shown in Figure 3 provides forced boiling in addition to the natural boiling of the LNG with the forced vapour being used for cryogenic cooling between at least one pair of stages of the compressor.

The equipment shown in Figure 3 adds to that shown in Figure 1 a forcing vaporiser 302 which has an inlet for LNG communicating with the pipeline 36 upstream of its union with the distributor pipe 38 and which also has an outlet communicating with a region of the gas passage 8 intermediate the outlet of the first compression stage 12 and the compressed natural gas inlet to the first interstage heat exchanger 26. The forcing vaporiser 302 is used to augment the flow of compressed natural gas from the outlet of the first compression stage 12. The forcing vaporiser 302 includes a shell-and-tube heat exchanger 304 in which liquefied natural gas from the storage tank 2 is vaporised by indirect heat exchange with steam or a hot mixture of water and glycol, and a mixing chamber 306 in which the thus vaporised natural gas is mixed with a flow of LNG which by-passes the shell-and-tube heat exchanger 304. In order to supply the by-pass flow of LNG there is a by-pass passage 308 having a flow control valve 310 disposed therein. The flow control valve 310 is operatively associated with a valve controller 312 which receives signals from a temperature sensor 314 in a pipeline 316 extending from the outlet of the chamber 306 to the region of the gas passage 8 intermediate the compression stage 12 and the first interstage heat exchanger 26. The arrangement is such that the amount of by-pass LNG can be adjusted so as to maintain the temperature of the flow to the gas passage at a chosen temperature or between chosen temperature limits. The flow of LNG into the shell-and-tube heat exchanger 304 is controlled by a flow control valve 318 which is operatively associated with a valve controller 320 responsive to demand signals for extra gas from a pressure sensor 322 in the pipeline 316 or downstream of the heat exchanger 32. The arrangement is such that the flow of vaporised natural gas from the forcing vaporiser 302 is at essentially the same pressure as the outlet pressure of the first compression stage 12.

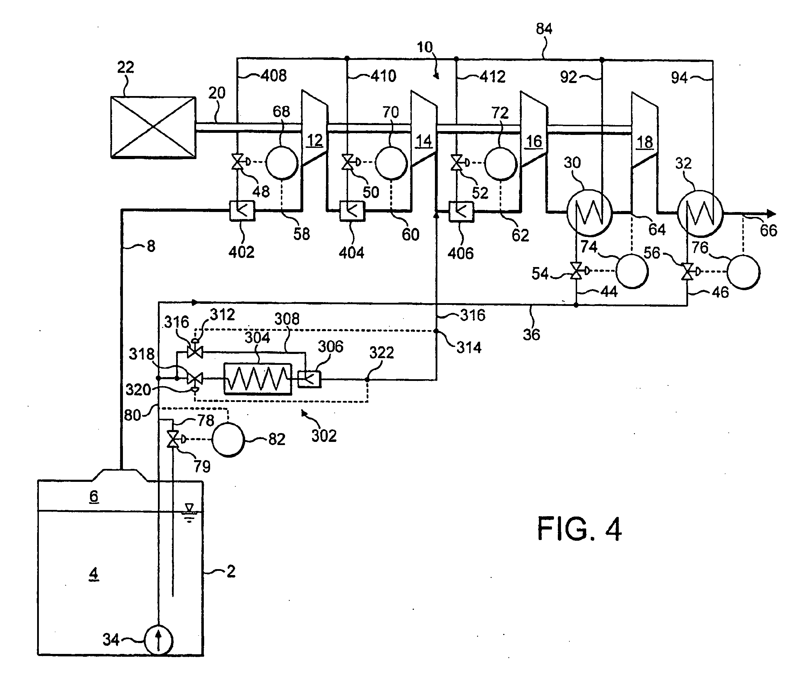

Referring now to Figure 4, there is shown a modification to the equipment illustrated in Figure 3, in which a combination of indirect and direct heat exchangers is used. Thus, the indirect heat exchangers 24, 26 and 28 shown in Figure 3 are replaced by direct heat exchangers 402, 404 and 406, respectively. Further, the pipes 38, 40, 42, 86, 88 and 90 are replaced by partially vaporised natural gas recycle pipes 408, 410 and 412 and the valves 48, 50 and 52, respectively are located in these pipes. A further difference from the apparatus shown in Figure 3 is that the forcing vaporiser 302 now communicates with a region of the gas passage 8 intermediate the outlet of the second compression stage 14 and the inlet to the direct interstage heat exchanger 406.

The operation of the equipment shown in Figure 4 is similar to that shown in Figure 3. In the heat exchangers 30 and 32 the LNG supplied to the heat exchangers 30 and 32 is only partially vaporised therein and the resultant mixture of cold vapour and liquid is recirculated to the direct heat exchangers 402, 404 and 406. It is found that this arrangement is particularly effective in keeping down the power consumption of the compressor 10.

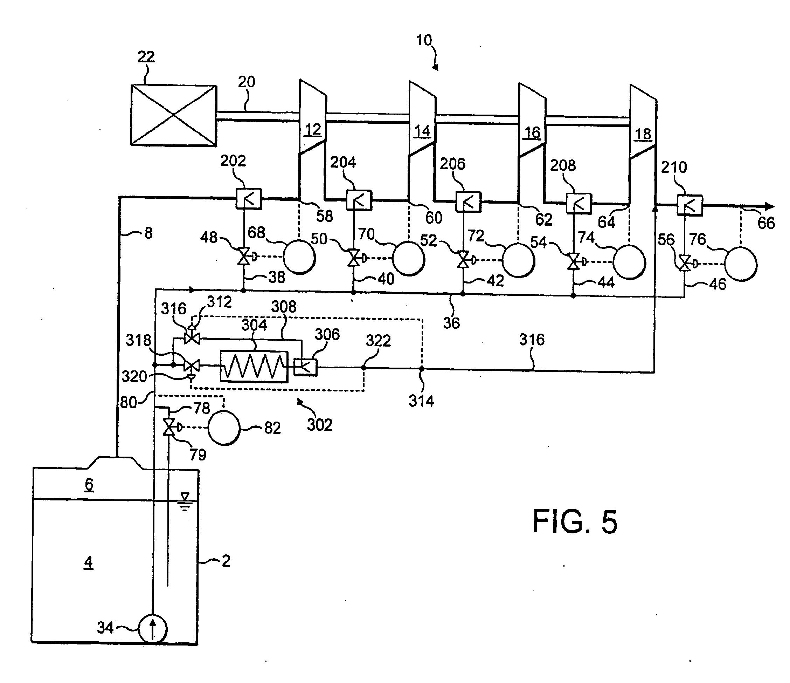

Referring now to Figure 5, the apparatus shown therein is essentially the same as that shown in Figure 2 but in addition employs a forcing vaporiser 302 essentially the same as that shown in Figure 3 except that it communicates with the gas passage 8 at a region thereof downstream of the outlet of the final compression stage 18 but upstream of the direct heat exchanger 210. In the embodiment shown in Figure 5, the forcing vaporiser 302 is operated so as to provide a flow of natural gas to the gas passage 8 at a pressure essentially the same as the outlet pressure of the final stage 18 of the compressor 10.

It can thus be appreciated that the compressor shown in Figure 3 employs a relatively low pressure forcing vaporiser, whereas that shown in Figure 5 employs a relatively high pressure forcing vaporiser, and that shown in Figure 4 employs a forcing vaporiser operating at a pressure between the operating pressure of the other two compressors.

The compressors shown in Figure 4 and Figure 5 may be modified by having a phase separation vessel placed upstream of any stage thereof which receives directly cooled natural gas, the phase separation vessel being essentially the same as the vessel 604 shown in Figure 6 and being fitted with a demister.

## Claims

1. A liquefied natural gas boil-off compressor (10) having at least three compression stages in series (12, 14, 16, 18), a gas passage passing through the series of compression stages, the gas passage extending through and being in heat exchange relationship with cooling means (26, 28, 30; 204, 206, 208; 404, 406, 30; 600) between each pair of compression stages (12, 14; 14, 16; 16, 18), wherein the cooling means (26, 28, 30; 204, 206, 208; 404, 406, 30; 600) are cryogenic cooling means (26, 28, 30; 204, 206, 208; 404, 406, 30; 600) **characterised in that** the liquefied natural gas boil-off compressor (10) is a rotary compressor (10), **in that** there is valve means (50, 52, 54) for controlling flow of cryogenic coolant into the cryogenic cooling means (26, 28, 30; 204, 206, 208; 404, 406, 30; 600) in response to the inlet temperature of the next compression stage (14, 16, 18) downstream of the cryogenic cooling means (26, 28, 30; 204, 206, 208; 404, 406, 30; 600) so as, in use, to maintain said inlet temperature at a chosen sub-ambient temperature or between chosen sub-ambient temperature limits, **in that** the cryogenic cooling means (26, 28, 30; 204, 206, 208; 404, 406, 30; 600) comprise indirect cooling means (26, 28, 30), and **in that** the natural gas boil-off compressor (10) is in association with a liquefied natural gas storage tank (2) having an outlet for the boiled-off natural gas communicating with the compressor (10), the cryogenic cooling means (26, 28, 30; 204, 206, 208; 404, 406, 30; 600) communicating with liquefied natural gas in the storage tank (2), a pump (34) in the tank (2) being adapted to pump liquefied natural gas to a main pipeline (36) communicating with cooling passages in the indirect cooling means (26, 28, 30) by distributor pipes (40, 42, 44), respectively, each valve means (50, 52, 54) operatively being associated through a valve controller (70) with a temperature sensor (60) positioned in a passage (8) at a region intermediate an exit for boil-off gas from the cryogenic cooling means (26, 28, 30; 204, 206, 208; 404, 406, 30; 600) and the inlet to the next compression stage (14, 16, 18), and the liquefied natural gas boil-off compressor (10) having an intermediate inlet communicating with a forcing liquefied natural gas vaporiser (302).

2. A liquefied natural gas boil-off compressor (10) according to claim 1, **characterised in that** there is a cryogenic cooling means (204, 206, 208; 600) intermediate each pair (12, 14; 14, 16; 16, 18) of successive compression stages.

3. A liquefied natural gas boil-off compressor (10) according to any one of the preceding claims, **characterised in that** there are at least three compression stages (12, 14, 16, 18) in sequence and **in that** there is at least one direct cryogenic cooling (404, 406) means and at least one indirect cryogenic cooling means (30).

4. A liquefied natural gas boil-off compressor (10) according to claim 3, **characterised in that** an inlet of a direct cooling means communicates with an outlet of an indirect cooling means.

5. A liquified natural gas boil-off compressor (10) according to any one of the preceding claims, **characterised in that** there is a cryogenic cooling means (32, 210) downstream of the final compression stage (18).

6. A liquefied natural gas boil-off compressor (10) according to any one of the preceding claims, **characterised in that** there is a cryogenic cooling means (24, 202, 402) upstream of the first compression stage (12).

## Patentansprüche

1. Verdampfungsverlustkompressor (10) für verflüssigtes Erdgas, der wenigstens drei in Reihe angeordnete Kompressionsstufen (12, 14, 16, 18) und einen Gasdurchlass, der durch die Reihe von Kompressionsstufen verläuft, enthält, wobei sich der Gasdurchlass durch Kühlungsmittel (26, 28, 30; 204, 206, 208; 404, 406, 30; 600) zwischen jedem Paar von Kompressionsstufen (12, 14; 14, 16; 16, 18) erstreckt und damit in einer Wärmeaustauschbeziehung steht, wobei die Kühlungsmittel (26, 28, 30; 204, 206, 208; 404, 406, 30; 600) kryogene Kühlungsmittel (26, 28, 30; 204, 206, 208; 404, 406, 30; 600) sind, **dadurch gekennzeichnet, dass** der Verdampfungsverlustkompressor (10) für verflüssigtes Erdgas ein Rotationskompressor (10) ist, dass Ventilmittel (50, 52, 54) vorhanden sind, um die Strömung von kryogenem Kühlmittel in die kryogenen Kühlungsmittel (26, 28, 30; 204, 206, 208; 404, 406, 30; 600) in Reaktion auf die Einlasstemperatur der nächsten Kompressionsstufe (14, 16, 18) stromabseitig der kryogenen Kühlungsmittel (26, 28, 30; 204, 206, 208; 404, 406, 30; 600) zu steuern, um im Gebrauch die Einlasstemperatur auf einer gewählten Temperatur unterhalb Umgebungstemperatur oder zwischen gewählten Grenzen unterhalb Umgebungstemperatur zu halten, dass die kryogenen Kühlungsmittel (26, 28, 30; 204, 206, 208; 404, 406, 30; 600) indirekte Kühlungsmittel (26, 28, 30) enthalten und dass dem Verdampfungsverlustkompressor (10) für Erdgas ein Speichertank (2) für verflüssigtes Erdgas zugeordnet ist, der einen Auslass für Verdampfungsverlust-Erdgas, der mit dem Kompressor (10) kommuniziert, besitzt, wobei die kryogenen Kühlungsmittel (26, 28, 30; 204, 206, 208; 404, 406, 30; 600) mit dem verflüssigten Erdgas in dem Speichertank (2) kommunizieren, wobei eine Pumpe (34) in dem Tank (2) dafür ausgelegt ist, verflüssigtes Erdgas zu einer Haupt-Pipeline (36) zu pumpen, die mit Kühlungsdurchlässen in den indirekten Kühlungsmitteln (26, 28, 30) durch jeweilige Verteilerrohre (40, 42, 44) kommuniziert, wobei jedes Ventilmittel (50, 52, 54) über eine Ventilsteuereinheit (70) einem Temperatursensor (60) betriebstechnisch zugeordnet ist, der in einem Durchlass (8) in einem Bereich zwischen einem Austritt für Verdampfungsverlustgas aus den kryogenen Kühlungsmitteln (26, 28, 30; 204, 206, 208; 404, 406, 30; 600) und dem Einlass in die nächste Kompressionsstufe (14, 16, 18) positioniert ist, und der Verdampfungsverlustkompressor (10) für verflüssigtes Erdgas einen Zwischeneinlass besitzt, der mit einem Zwangsverdampfer (302) für verflüssigtes Erdgas kommuniziert.

2. Verdampfungsverlustkompressor (10) für verflüssigtes Erdgas nach Anspruch 1, **dadurch gekennzeichnet, dass** kryogene Kühlungsmittel (204, 206, 208; 600) vorhanden sind, die sich zwischen jedem Paar (12, 14; 14, 16; 16, 18) aufeinander folgender Kompressionsstufen befinden.

3. Verdampfungsverlustkompressor (10) für verflüssigtes Erdgas nach einem der vorhergehenden Ansprüche, **dadurch gekennzeichnet, dass** nacheinander wenigstens drei Kompressionsstufen (12, 14, 16, 18) vorhanden sind und dass wenigstens ein direktes kryogenes Kühlungsmittel (404, 406) und wenigstens ein indirektes kryogenes Kühlungsmittel (30) vorhanden sind.

4. Verdampfungsverlustkompressor (10) für verflüssigtes Erdgas nach Anspruch 3, **dadurch gekennzeichnet, dass** ein Einlass eines direkten Kühlungsmittels mit einem Auslass eines indirekten Kühlungsmittels kommuniziert.

5. Verdampfungsverlustkompressor (10) für verflüssigtes Erdgas nach einem der vorhergehenden Ansprüche, **dadurch gekennzeichnet, dass** stromabseitig der letzten Kompressionsstufe (18) ein kryogenes Kühlungsmittel (32, 210) vorhanden ist.

6. Verdampfungsverlustkompressor (10) für verflüssigtes Erdgas nach einem der vorhergehenden Ansprüche, **dadurch gekennzeichnet, dass** stromaufseitig der ersten Kompressionsstufe (12) ein kryogenes Kühlungsmittel (24, 202, 402) vorhanden ist.

## Revendications

1. Compresseur d'évaporation de gaz naturel liquéfié (10) ayant au moins trois étages de compression en série (12, 14, 16, 18), un passage de gaz passant à travers la série d'étages de compression, le passage de gaz s'étendant à travers des moyens de refroidissement (26, 28, 30 ; 204, 206, 208 ; 404, 406, 30 ; 600) entre chaque paire d'étages de compression (12, 14, 16, 18) et étant en relation d'échange thermique avec lesdits moyens de refroidissement, dans lequel les moyens de refroidissement (26, 28, 30 ; 204, 206, 208 ; 404, 406, 30 ; 600) sont des moyens de refroidissement cryogénique (26, 28, 30 ; 204, 206, 208 ; 404, 406, 30 ; 600), **caractérisé en ce que** le compresseur d'évaporation de gaz naturel liquéfié (10) est un compresseur rotatif (10), **en ce qu'**il existe des moyens de vanne (50, 52, 54) pour réguler un écoulement de fluide de refroidissement cryogénique dans les moyens de refroidissement cryogénique (26, 28, 30 ; 204, 206, 208 ; 404, 406, 30 ; 600) en réponse à la température d'entrée de l'étage de compression suivant (14, 16, 18) en aval des moyens de refroidissement cryogénique (26, 28, 30 ; 204, 206, 208 ; 404, 406, 30 ; 600) de manière à, en utilisation, maintenir ladite température d'entrée à une température subatmosphérique choisie ou entre des limites de température subatmosphérique choisies, **en ce que** les moyens de refroidissement cryogénique (26, 28, 30 ; 204, 206, 208 ; 404, 406, 30 ; 600) comportent des moyens de refroidissement indirect (26, 28, 30), et **en ce que** le compresseur d'évaporation de gaz naturel (10) est en association avec un réservoir de stockage de gaz naturel liquéfié (2) ayant une sortie pour le gaz naturel évaporé communiquant avec le compresseur (10), les moyens de refroidissement cryogénique (26, 28, 30 ; 204, 206, 208 ; 404, 406, 30 ; 600) communiquant avec le gaz naturel liquéfié dans le réservoir de stockage (2), une pompe (34) dans le réservoir (2) étant adaptée pour pomper du gaz naturel liquéfié vers une canalisation principale (36) communiquant avec des passages de refroidissement dans les moyens de refroidissement indirect (26, 28, 30) par des tuyaux de distribution (40, 42, 44), respectivement, chaque moyen de vanne (50, 52, 54) étant opérationnellement associé par l'intermédiaire d'une commande de vanne (70) à un capteur de température (60) positionné dans un passage (8) sur une région entre une sortie de gaz évaporé à partir des moyens de refroidissement cryogénique (26, 28, 30 ; 204, 206, 208 ; 404, 406, 30 ; 600) et l'entrée de l'étage de compression suivant (14, 16, 18), et le compresseur d'évaporation de gaz naturel liquéfié (10) ayant une entrée intermédiaire communiquant avec un vaporisateur de gaz naturel liquéfié de forçage (302).

2. Compresseur d'évaporation de gaz naturel liquéfié (10) selon la revendication 1, **caractérisé en ce qu**'il existe des moyens de refroidissement cryogénique (204, 206, 208 ; 600) entre chaque paire (12, 14 ; 14, 16 ; 16, 18) d'étages de compression successives.

3. Compresseur d'évaporation de gaz naturel liquéfié (10) selon l'une quelconque des revendications précédentes, **caractérisé en ce qu**'il existe au moins trois étages de compression (12, 14, 16, 18) en séquence et en ce qu'il existe au moins un moyen de refroidissement cryogénique direct (404, 406) et au moins un moyen de refroidissement cryogénique indirect (30).

4. Compresseur d'évaporation de gaz naturel liquéfié (10) selon la revendication 3, **caractérisé en ce qu'**une entrée d'un moyen de refroidissement direct communique avec une sortie d'un moyen de refroidissement indirect.

5. Compresseur d'évaporation de gaz naturel liquéfié (10) selon l'une quelconque des revendications précédentes, **caractérisé en ce qu'**il existe des moyens de refroidissement cryogénique (32, 210) en aval de l'étage de compression final (18).

6. Compresseur d'évaporation de gaz naturel liquéfié (10) selon l'une quelconque des revendications précédentes, **caractérisé en ce qu**'il existe des moyens de refroidissement cryogénique (24, 202, 402) en amont du premier étage de compression (12).
